# EUROPÄISCHE PATENTANMELDUNG

(11) **EP 1 579 789 A1**
(43) Veröffentlichungstag der Anmeldung: **28.09.2005**
(21) Anmeldenummer: 05006237.1
(22) Anmeldetag: 22.03.2005
(51) Int. Cl.: A47F 1/12

(54) **Warenbehälter zum Lagern und Ausgeben von Zigarettenschachteln o.dgl. Verpackungseinheiten**

(30) Priorität: 26.03.2004 DE 202004004764 U
(71) Anmelder: Heinrich J. Kesseböhmer KG, 49152 Bad Essen (DE)
(72) Erfinder: Lindemeier, Karl-Heinrich, 32130 Enger (DE)
(74) Vertreter: Pott, Ulrich

(57) **Zusammenfassung**

Ein Warenbehälter zum Lagern und Ausgeben von Zigarettenschachteln o. dgl. Verpackungseinheiten ist mit zumindest einem Warenträger versehen, der in einer Reihenanordnung jeweilige Warenkanäle aufweist. Diesen ist eine rückseitig die Reihenanordnung hintergreifende und an der letzten der Verpackungseinheiten anliegende Schubvorrichtung zugeordnet, wobei deren Warenschieber mittels eines als vorgespannte Rückholfeder ausgebildeten Kraftspeichers zu einem im Bereich einer vorderen Entnahmeöffnung vorgesehenen Anschlagteil hin verlagerbar ist. Bei dieser Bewegung ist der Füllzustand des Warenkanals automatisch kontrollierbar. Erfindungsgemäß weist die Schubvorrichtung eine in Längsrichtung des Warenkanals die jeweilige Position des Warenschiebers erfassende Wegmeßeinrichtung auf. Diese ist zur Erfassung der im Warenkanal enthaltenen Verpackungseinheiten mit einer Signalverarbeitungseinheit verbunden.

## Beschreibung

Die Erfindung betrifft einen Warenbehälter zum Lagern und Ausgeben von Zigarettenschachteln o. dgl. Verpackungseinheiten gemäß dem Oberbegriff des Anspruchs 1.

Gemäß DE 31 16 145 A1 wird eine Warenhalte- und Präsentationsvorrichtung vorgeschlagen, bei der in einem Warenkanal hintereinander in einer Reihenanordnung befindliche Verpackungseinheiten auf einem zur Ausgabeseite hin schräg verlaufenden Tragboden abgestützt sind und an der in Ausschubrichtung letzten der Verpackungseinheiten ein als Belastungsteil wirksamer Rollkörper anliegt. Mit diesem Rollkörper wird auf dem schrägen Tragboden eine Schubkraft gegen die Verpackungseinheiten und damit deren kontinuierliche Verlagerung zu einem vorderen Anschlagteil hin bewirkt. Der metallische Rollkörper wird dabei gleichzeitig als Kontaktgeber im Bereich jeweiliger im Tragboden vorgesehener Gleiterbahnen wirksam, so daß durch elektrische Signalerfassung eine Bestandszählung der Verpackungseinheiten möglich ist.

Bei einer Lösung gemäß US 5,992,652 ist die Reihenanordnung der Verpackungseinheiten von einem eine Rollenfeder als Belastungsteil aufweisenden Warenschieber hintergriffen, so daß zum vorderseitigen Anschlagteil hin nach Entnahme der vordersten Verpackungseinheit ein automatischer Weitertransport erfolgt. Zur Erzeugung eines den Füllstand des Warenkanals anzeigenden Signales ist der Warenschieber im Bereich der Rollenfeder mit einem optisch erfaßbaren Signalgeber versehen, so daß bei dessen Eintritt in eine quer zum Warenkanal ausgerichteten Lichtschranke ein entsprechendes Informationssignal erzeugt und nur ein Leerungszustand angezeigt werden kann.

Bei einem Zigarettenträger gemäß DE 101 53 495 A1 kann ebenfalls zur Feststellung eines Leerungszustandes des Warenkanals ein am Warenschieber vorgesehener Reedkontakt mit einem nahe dem vorderen Anschlagteil ortsfest gehaltenen Magnet oder eine mit dem Warenschieber bewegte Signalfahne mit einer quer zum Warenkanal im Warenbehälter verlaufenden Lichtschranke kombiniert werden, so daß bei Erreichen einer vorbestimmten Position des Warenschiebers eine Kassierperson ein entsprechendes Signal zum Nachfüllen des Warenkanals erhält.

Gemäß DE 197 45 813 A1 ist ein Verkaufsautomat mit vertikalen Entnahmeschächten gezeigt, in denen sich unter Schwerkraftwirkung verlagernde Füllelemente eine erfaßbare Meßskala für ein Lesegerät freigeben, und in DE 200 16 735 U1 werden die Signale von Gewichtssensoren zur Feststellung eines Befüllungszustandes von Spendern genutzt.

Die Erfindung befaßt sich mit dem Problem, einen Warenbehälter zur Ausgabe von Verpackungseinheiten, insbesondere Zigarettenschachteln, zu schaffen, bei dem mit geringem technischem Aufwand installierbare Bauteile sowohl eine Füllstandskontrolle als auch eine automatische Überwachung der Anzahl von in insbesondere horizontalen Warenkanälen befindlichen sowie aus diesen entnommenen Verpackungseinheiten ermöglichen.

Die Erfindung löst diese Aufgabe mit den Merkmalen des Anspruchs 1. Hinsichtlich wesentlicher weiterer Ausgestaltungen wird auf die Ansprüche 2 bis 10 verwiesen.

Bei dem erfindungsgemäßen Warenbehälter sind die die Verpackungseinheiten verlagernden Schubvorrichtungen jeweils mit einer in Längsrichtung des Warenkanals jede Position des federbelasteten Warenschiebers erfassenden Wegmeßeinrichtung versehen. Diese Wegmeßeinrichtung bildet in Verbindung mit einer zu beliebigen Zeitpunkten zuschaltbaren Signalverarbeitungseinheit eine programmierbare Überwachungsbaugruppe, mit der mittels eines von der Wegmeßeinrichtung erzeugten Signals eine permanente Abfrage der im jeweiligen Warenkanal befindlichen Anzahl von Verpackungseinheiten durchführbar ist. Damit können im Warenbehälter durch eine integrierte elektronische Mengenerfassung die Zigarettenschachteln stückzahlgenau erfaßt und deren Entnahme überwacht werden. Für die vorgesehene Wegmessung in Längsrichtung des Warenkanals wirkt der jeweilige Warenschieber auf seinem Verschiebeweg mit einem einen elektrischen Kontakt an einem Folienpotentiometer o. dgl. elektrischen Widerstandselement auslösenden Tastelement zusammen oder durch einen in Richtung des Warenkanals wirkenden optischen Sensor wird die Position des Warenschiebers aus der Reflexion eines Meßstrahls errechnet und damit der Warenbestand erfaßt.

Dieses System mit integrierter Wegmessung ermöglicht durch Verknüpfung eines Warenwirtschafts- bzw. Kassensystems eine jederzeitige Inventur der Verpackungseinheiten, so daß für Warenvorrats-, Präsentations- und Verkaufsanlagen mit mehreren übereinander bzw. nebeneinander angeordneten Warenkanälen eine nutzerspezifisch anpaßbare Systemlösung erreicht ist. Die jeweiligen Warenschächte des Systems können dabei waagerecht, schräg oder senkrecht angeordnet sein und weisen mit dem Warenschieber eine integrierte Vorschubtechnik auf, die jeweils mit dem permanenten Überwachungssystem zusammenarbeitet. Sämtliche der dabei erzeugten Signale werden einer elektronischen Auswerteeinheit zugeführt, die durch variable Programmierung eine Out-Of-Stock-Anzeige, eine Alarmierung, eine Inventur o. dgl. Kontrollanzeigen mit geringem Aufwand ermöglicht.

Weitere Einzelheiten und vorteilhafte Ausgestaltungen ergeben sich aus der nachfolgenden Beschreibung und den Zeichnungen, die mehrere Ausführungsbeispiele des Gegenstands der Erfindung näher veranschaulichen. In der Zeichnung zeigen:
- Fig. 1: eine perspektivische Gesamtansicht eines Warenbehälters zum Lagern und Ausgeben von Zigarettenschachteln o. dgl. Verpackungseinheiten,
- Fig. 2: eine teilweise geschnittene Draufsicht auf einen mehrere neben-einander befindliche Warenkanäle aufweisenden Tragboden gemäß einer Linie II-II in Fig. 1,
- Fig. 3: eine Seitenansicht gemäß einer Linie III-III in Fig. 2,
- Fig. 4: eine perspektivische Einzeldarstellung der Schubvorrichtung gemäß Fig. 3 mit dem Warenschieber,
- Fig. 5: eine Schnittdarstellung der Schubvorrichtung gemäß einer Linie V-V in Fig. 4,
- Fig. 6: eine Schnittdarstellung im Bereich des Warenschiebers gemäß einer Linie VI-VI in Fig. 5,
- Fig. 7 und Fig. 8: jeweilige Einzeldarstellungen der Schubvorrichtung mit unterschiedlichen Kontaktgebern im Bereich der Warenschieber,
- Fig. 9: eine zweite Ausführung einer im Bereich der Schubvorrichtung vorgesehenen Wegmeßeinrichtung in Form einer opto-elektronischen Baugruppe,
- Fig. 10: eine Seitenansicht der Wegmeßeinrichtung gemäß einer Schnittlinie X-X in Fig. 9,
- Fig. 11 und Fig. 12: weitere Ausführungsform von in den Warenschieber integrierten optischen Wegmeßeinrichtungen.

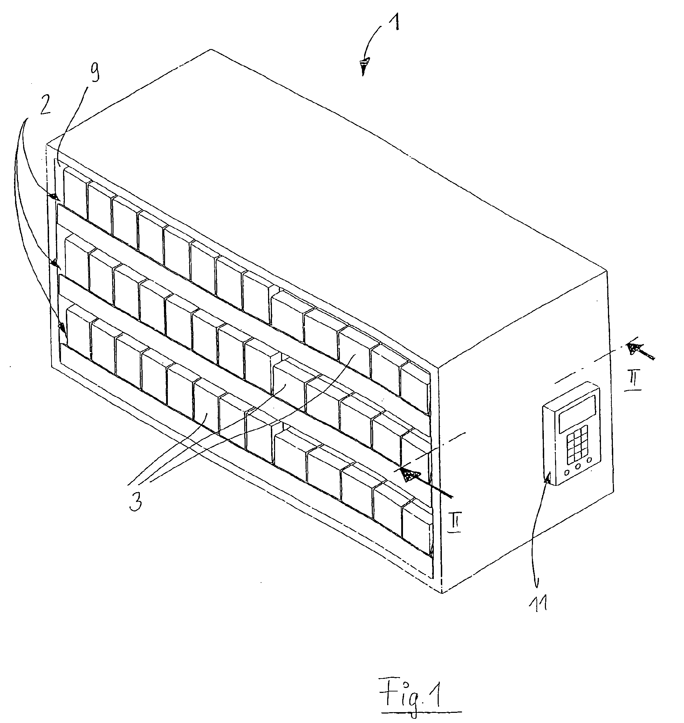

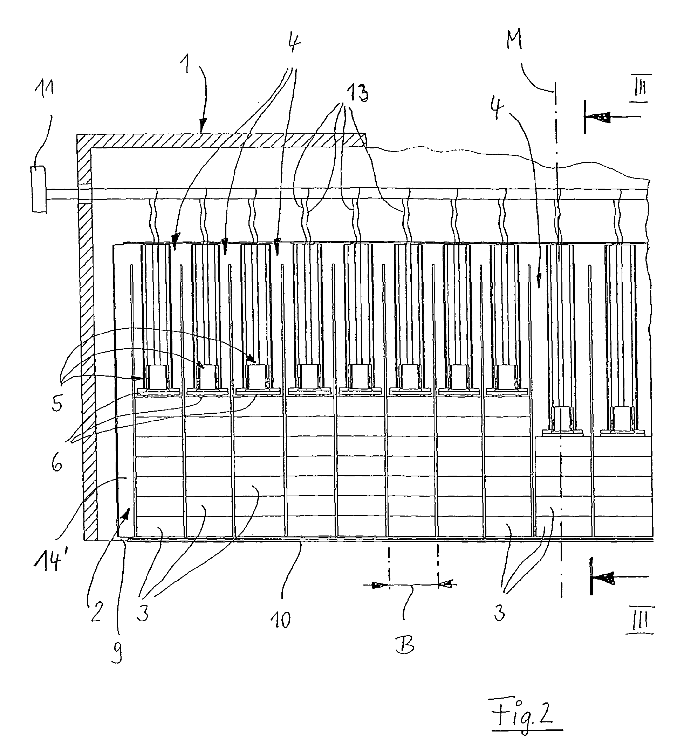

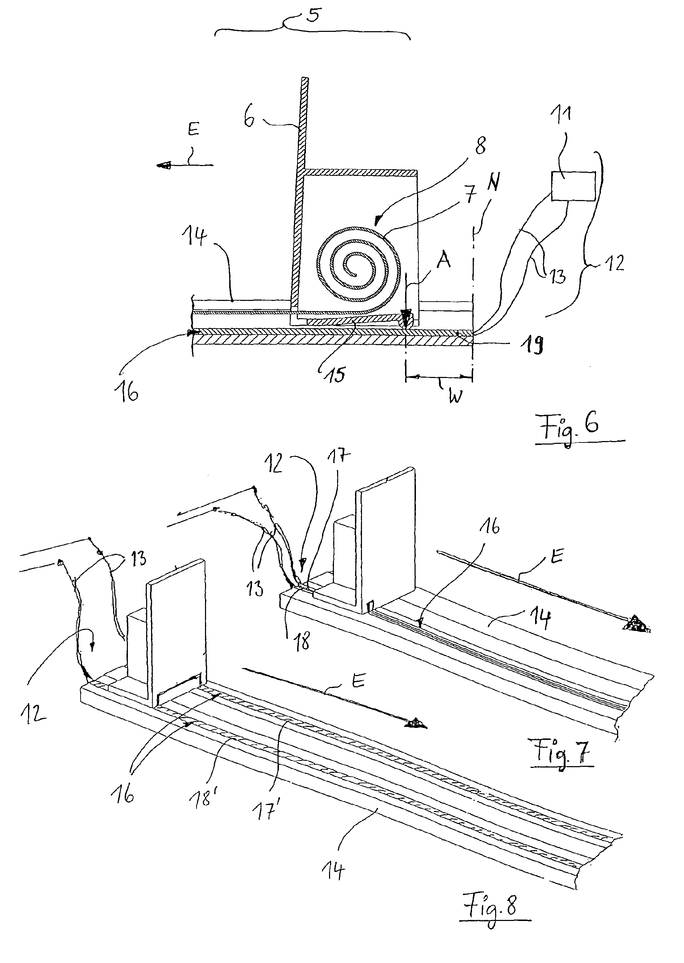

In Fig. 1 ist ein insgesamt mit 1 bezeichneter Warenbehälter dargestellt, in dem jeweilige Warenträger 2 zum Lagern und Ausgeben von Zigarettenschachteln o. dgl. Verpackungseinheiten 3 vorgesehen sind. Die teilweise geschnittene Draufsicht gemäß Fig. 2 zeigt, daß die Verpackungseinheiten 3 in einer jeweiligen Reihenanordnung hintereinander in Warenkanälen 4 der Warenträger 2 aufgenommen sind. Der Warenkanal 4 weist dabei eine rückseitig die Reihenanordnung hintergreifende und an der letzten der Verpackungseinheiten 3 anliegende Schubvorrichtung 5 auf. Ein Warenschieber 6 dieser Schubvorrichtung 5 ist mittels einer als vorgespannte Rückholfeder 7 (Fig. 6) ausgebildeten Kraftspeichers 8 zu einem im Bereich einer vorderen Entnahmeöffnung 9 des Warenbehälters 1 vorgesehenen Anschlagteil 10 (Fig. 3) hin verlagerbar. Diese Verlagerung des Warenschiebers 6 im Bereich der Schubvorrichtung 5 kann dazu genutzt werden, den Füllzustand des Warenkanals 4 automatisch zu kontrollieren.

Bei dem erfindungsgemäßen Warenbehälter 1 weist die Schubvorrichtung 5 zur Füllstandskontrolle eine in Längsrichtung (Längsmittelebene M) des jeweiligen Warenkanals 4 die jeweilige Position des Warenschiebers 6 erfassende und insgesamt mit 12 bezeichnete Wegmeßeinrichtung auf. Diese Wegmeßeinrichtung 12 ist zur Erfassung der im Warenkanal 4 enthaltenen Verpackungseinheiten 3 mit einer Signalverarbeitungseinheit 11 verbunden (Fig. 3), wobei die Wegmeßeinrichtung 12 im Bereich des beweglichen Warenschiebers 6 keine Kabelverbinder aufweist und damit diese Baugruppe des Systems einfach installierbar und wenig störanfällig ist.

Die Schnittdarstellung des Warenbehälters 1 gemäß Fig. 2 verdeutlicht, daß der Warenträger 2 mehrere Warenkanäle 4 mit jeweiligen konstruktionsgleichen Schubvorrichtungen 5 aufweist und sämtliche der an diesen vorgesehenen Wegmeßeinrichtungen 12 über jeweilige mit Steckverbindern versehene Verbindungsleitungen 13 mit der einen Signalverarbeitungseinheit 11 verbunden sind. Denkbar ist dabei auch, daß eine Datenübertragen per Funk vorgesehen wird (nicht dargestellt).

In zweckmäßiger Ausführung ist der Warenbehälter 1 als Teil einer Warenvorrats-, Warenpräsentations- oder Warenverkaufsanlage vorgesehen, wobei in einer Anordnung nach Art eines Regals mehrere der Warenträger 2 (Fig. 1) übereinander angeordnet sind. Damit ist eine Funktionseinheit gebildet, in der die jeweiligen Warenkanäle 4 neben der dargestellten waagerechten Anordnung auch eine zur Entnahmeöffnung 9 hin schräg verlaufende oder senkrechte Vorschubebene (nicht dargestellt) definieren können. In jedem Falle sind die jeweiligen Schubvorrichtungen 5 mit einer elektronischen Wegmeßeinrichtung 12 so kombiniert, daß deren elektronische Ausgangsdaten der mit Mikroprozessoren versehenen Signalverarbeitungseinheit 11 zuführbar sind und in dieser die Daten durch ein entsprechendes Computerprogramm weiterverarbeitet werden.

Die jeweilige Wegmeßeinrichtung 12 im Bereich der Warenkanäle 4 ist so konzipiert, daß auch Verpackungseinheiten 3 unterschiedlicher Abmessungen erfaßbar sind. Vorgesehen ist, daß die Verpackungseinheiten 3 jeweils als Reihe unterschiedlicher Breite B bzw. Dicke D in den Warenkanälen 4 aufgenommen werden können. Dazu sind die Bauteile des Warenschiebers 6 bzw. der Schubvorrichtung 5 quer zur Entnahmeöffnung 9 verschiebbar auf dem Warenträger 2 festgelegt.

Die entsprechend der Abmessung D der Verpackungseinheiten 3 programmierbare Signalverarbeitungseinheit 11 ist insbesondere mit einem elektrischen Zählwerk versehen, mittels dem eine inventurgerechte Erfassung der Anzahl von im Warenkanal 4 befindlichen bzw. aus diesem entnommenen Verpackungseinheiten 3 durchführbar ist. Dazu wird nach einer Messung der Position des Warenschiebers 6 das Meßergebnis mit einer im Steuerprogramm hinterlegten Geometriedefinition der Verpackungseinheit 3 vergleichen, zu der ein jeweiliger Platzbedarf im Warenkanal 4 variabel programmiert ist. Aus jeweiligen Änderungen des erfaßten Meßergebnisses kann eine vollständige Zugangs- und Abgangsauswertung der Schachtel-Anzahl abgeleitet werden. Dadurch ist durch Verknüpfung dieser Daten mit einem Warenwirtschafts- oder Kassensystem eine jederzeitige Inventur des Warenbehälters 1 bzw. des jeweiligen Warenkanals 4 möglich. Insbesondere ist vorgesehen, daß bei einer nahezu vollständigen Entleerung eines der Warenkanäle 4 eine Alarmierung für eine Bedienperson angezeigt wird bzw. eine Out-of-Stock-Anzeige durch eine entsprechende programmierte Signalgebung erfolgt.

Die Zusammenschau von Fig. 3 bis Fig. 8 zeigt eine erste Ausführung der mit einem Abstandssensor versehenen Wegmeßeinrichtung 12 im Bereich der Schubvorrichtung 5. Deren Schubschiene 14 ist an einem Bodenteil 14' des Warenträgers 2 festgelegt und in diese Schubschiene 14 ist ein mit einem elektrischen Taster 15 am Warenschieber 6 zusammenwirkendes elektrisches Widerstandselement 16 integriert. Dieses Widerstandselement 16 kann dabei als eine doppelspurige Leiterbahn 17, 18 bzw. 17', 18' (Fig. 7, Fig. 8), eine auf der Schubschiene 14 festgelegte Tastspur in Form eines leitfähigen Klebebandes, einer aufgedruckten Tastspur und/oder eines leitenden Farbauftrages (nicht dargestellt) vorgesehen sein. Ebenso ist denkbar, daß der Abstandssensor von einer nicht näher dargestellten kapazitiven Sensor-Einheit gebildet ist. Mit dieser aus den Bauteilen von 15 und 16 bestehenden Baugruppe kann ein vom Warenschieber 6 ausgehend von einer Null-Stellung (Ebene N) in Pfeilrichtung E zurückgelegte Schubweg W als Teilstrecke einer Gesamtlänge G des verfügbaren Warenkanals 4 stufenlos erfaßt werden.

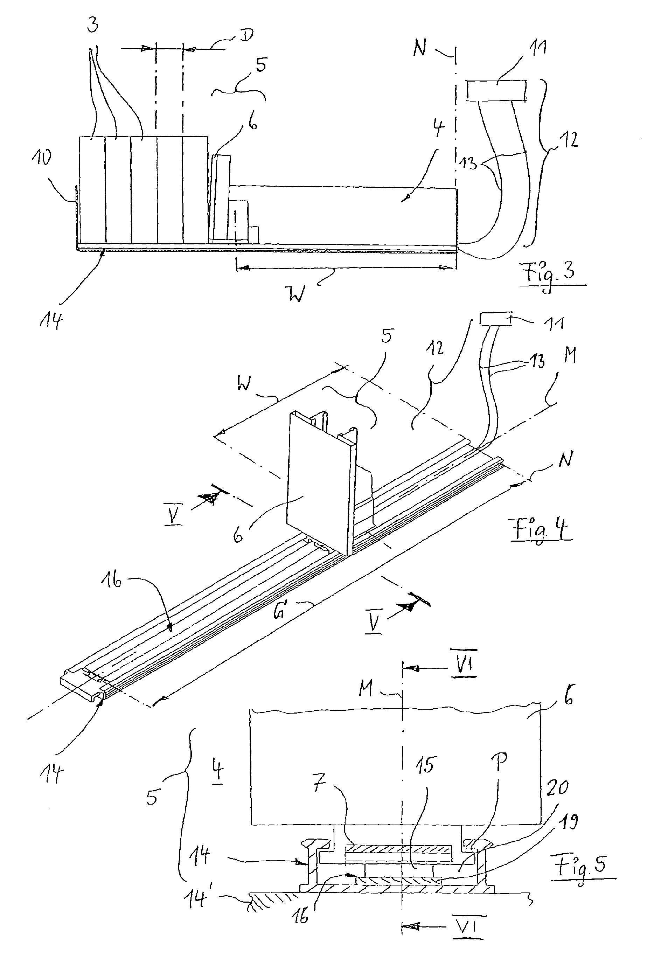

In vorteilhafter Ausführung weist der Abstandssensor ein als Leitplastik-Potentiometer 19 ausgebildetes Widerstandselement 16 (Fig. 5, Fig. 6) auf. Auf dieses wirkt der Taster 15 bei entsprechender Vorschubbewegung E des Warenschiebers 6 in einer Auflagerichtung A als Schleifkontakt ein und damit wird auf der Meßstrecke W ein entsprechendes Spannungspotential von in die Leitplastik 19 integrierten Potentiometerbahnen abgegriffen. Für die Anwendung von Leitplastik-Potentiometern 19 spricht insbesondere, daß diese technisch ausgereifte Positionssensor-Technologie ein günstiges Preis-Leistungs-Verhältnis im Vergleich mit herkömmlichen Potentiometern aufweist und eine langzeitig verschleißfreie Führung des Tasters 15 möglich ist.

Die Querschnittsdarstellungen gemäß Fig. 5 und 6 zeigen, daß die Schubschiene 14 des Warenkanals 4 im Bereich eines Führungsprofils P für den Warenschieber 6 eine zentrale Aufnahmerinne 20 für die in dieser zum vorderen Anschlagteil 10 hin gespannte Rückholfeder 7 aufweist und in parallelem Abstand zu diesem Kraftspeicher 8 das Widerstandselement 16 in Form des Leitplastik-Potentiometers 19 verläuft. In der gemäß Fig. 4 dargestellten Bedienstellung kann aus dem Verschiebeweg W des Warenschiebers 6 der prozentuale Anteil am Gesamtschiebeweg G errechnet und damit die Anzahl der aus dem Warenkanal 4 entnommenen bzw. noch in diesem befindlichen Verpackungseinheiten 3 errechnet werden.

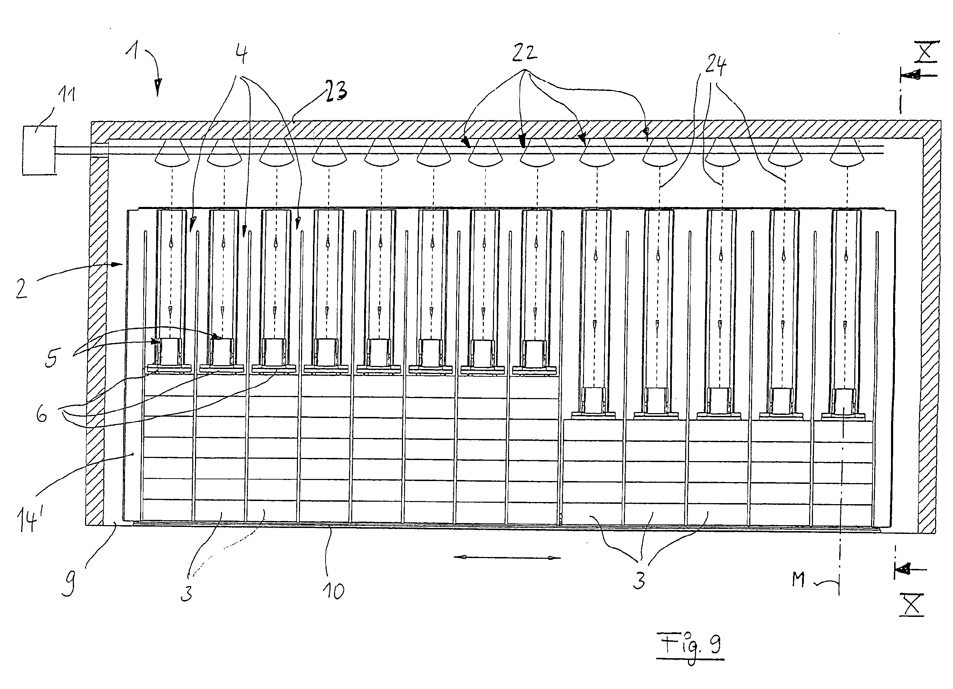

In Fig. 9 ist in einer teilweise geschnittenen Draufsicht ähnlich Fig. 2 eine zweite Ausführung des Abstandssensors zur Wegmessung dargestellt, wobei hier eine jeweilige opto-elektronische Sender-Empfänger-Einheit 22 vorgesehen ist, deren vom Bereich der Rückwand 23 des Warenkanals 4 ausgesendeter Meßstrahl 24 nach Reflexion, beispielsweise an der Rückseite 25 des Warenschiebers 6, in dieser Sender-Empfänger-Einheit 22 zeitversetzt aufgenommen wird. Damit ist eine Erfassung der einem Weg D entsprechenden Meßstrecke (Fig. 10) erreicht, aus diesem Meßergebnis kann mittels der Signalverarbeitungseinheit 11 die Anzahl der im Warenkanal 4 befindlichen Verpackungseinheiten 3 errechnet werden und danach erfolgt ein Out-of-Stock-Signal bzw. ist die vorbeschriebene Einzel- und Gesamtinventur des Warenbehälters 1 durchführbar.

Eine der Ausführung gemäß Fig. 9 und 10 ähnliche Erfassungseinheit zur Wegmessung ist in Fig. 11 dargestellt, wobei hier die Position des Warenschiebers 6 über eine an der Rückholfeder 7 befindliche Markierung 26 durch eine opto-elektronische Einheit 22' erfaßt wird. Diese Markierung 26 ist für einen Meßstrahl F der Einheit 22 erfaßbar auf der aufrollbaren Rückholfeder 7 angebracht. Denkbar ist dabei, daß auf der Rückholfeder 7 lediglich ein einziger, insbesondere das Ende der Verschiebung W kurz vor dem Anschlagteil 10 signalisierender Markierungsteil 27 vorgesehen ist oder mittels eines an der Rückholfeder 7 befindlichen Meßstreifens, Lochsystems, Barcodes o. dgl. (nicht dargestellt) eine permanente Wegmessung mittels einer Vielzahl von optisch erfaßten Wegmarkierungen erfolgt. Der sich ändernde Meßweg D' wird dabei nur mittelbar zur Informationsgewinnung genutzt.

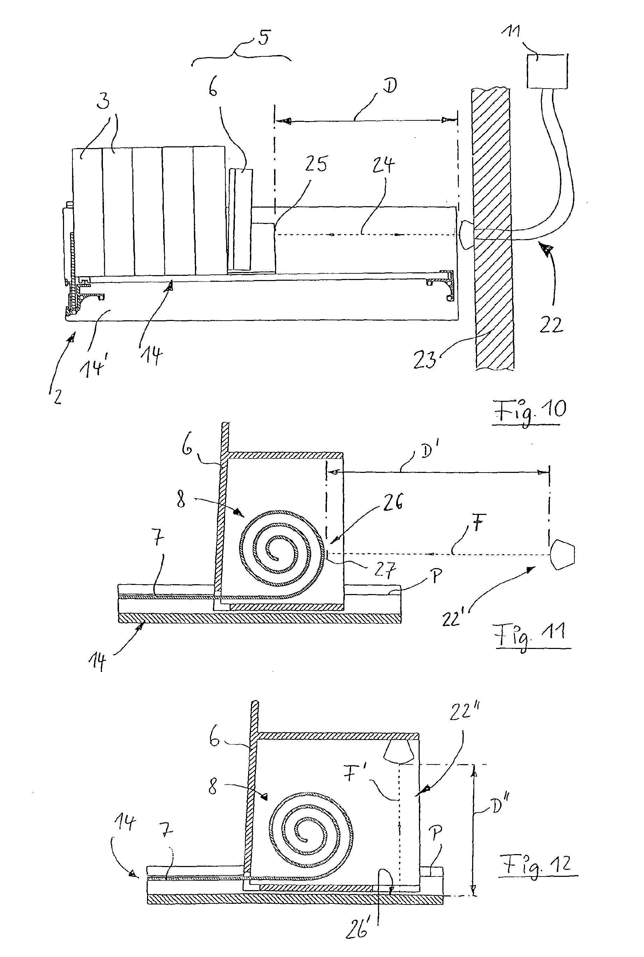

In Fig. 12 ist eine weitere optische Variante zur Wegmessung mittels der opto-elektronischen Einheit 22" dargestellt, wobei diese Sender-Empfänger-Einheit unmittelbar auf dem Warenschieber 6 vorgesehen ist. Diese Leseeinheit 22" ist mit ihrem Lese-Strahl F' auf eine im Bereich der Aufnahmerinne 20 unmittelbar auf dem Bodenteil 27 vorgesehene Markierung 26' eingestellt, wobei diese Markierung 26' ebenfalls in Form eines Meßstreifens, eines Lochsystems, eines Barcodes o. dgl. optisch erfaßbaren Gegengliedes ausgebildet sein kann.

## Patentansprüche

1. Warenbehälter zum Lagern und Ausgeben von Zigarettenschachteln o. dgl. Verpackungseinheiten (3), mit zumindest einem diese in einer Reihenanordnung hintereinander in einem Warenkanal (4) aufnehmenden Warenträger (2), wobei dem Warenkanal (4) eine rückseitig die Reihenanordnung hintergreifende und an der letzten der Verpackungseinheiten (3) anliegende Schubvorrichtung (5) zugeordnet ist, deren Warenschieber (6) mittels eines als vorgespannte Rückholfeder (7) ausgebildeten Kraftspeichers (8) zu einem im Bereich einer vorderen Entnahmeöffnung (9) vorgesehenen Anschlagteil (10) hin verlagerbar ist und dabei der Füllzustand des Warenkanals (4) automatisch kontrollierbar ist, **dadurch gekennzeichnet, daß** die Schubvorrichtung (5) eine in Längsrichtung (M) des Warenkanals (4) die jeweilige Position des Warenschiebers (6) erfassende Wegmeßeinrichtung (12; 22; 22'; 22") aufweist und diese zur Erfassung der im Warenkanal (4) enthaltenen Verpackungseinheiten (3) mit einer Signalverarbeitungseinheit (11) verbunden ist.

2. Warenbehälter nach Anspruch 1, **dadurch gekennzeichnet, daß** dieser mehrere Warenkanäle (4) mit Schubvorrichtungen (5) aufweist und sämtliche der jeweiligen Wegmeßeinrichtungen (12; 22; 22'; 22") mit der einen Signalverarbeitungseinheit (11) verbunden sind.

3. Warenbehälter nach Anspruch 1 oder 2, **dadurch gekennzeichnet, daß** die Wegmeßeinrichtung (12) auf unterschiedliche Abmessungen (B, D) von Verpackungseinheiten (3) einstellbar ist.

4. Warenbehälter nach einem der Ansprüche 1 bis 3, **dadurch gekennzeichnet, daß** die Signalverarbeitungseinheit (11) mit einem elektrischen Zählwerk zusammenwirkt, mittels dem die zu beliebigen Zeitpunkten erfaßte Anzahl von Verpackungseinheiten (3) auswertbar ist.

5. Warenbehälter nach einem der Ansprüche 1 bis 4, **dadurch gekennzeichnet, daß** die Wegmeßeinrichtung (12) mit einem Abstandssensor versehen ist, der von zumindest einem in eine Schubschiene (14) der Schubvorrichtung (5) integrierten und mit einem elektrischen Taster (15) am Warenschieber (6) zusammenwirkenden elektrischen Widerstandselement (16) gebildet ist.

6. Warenbehälter nach einem der Ansprüche 1 bis 5, **dadurch gekennzeichnet, daß** der Abstandssensor (12) im Bereich der Schubschiene (14) mit einem Folienpotentiometer, Magnetpotentiometer und/oder einer kapazitiven Einheit versehen ist.

7. Warenbehälter nach einem der Ansprüche 1 bis 6, **dadurch gekennzeichnet, daß** der Abstandssensor (12) im Bereich des Widerstandselements (16) eine doppelspurige Leiterbahn (17, 18; 17', 18'), ein auf der Schubschiene (14) nach Art eines leitfähigen Bandes angeordnetes Leitplastik-Potentiometer (19), eine aufgedruckte Tastspur und/oder einen leitenden Farbauftrag aufweist.

8. Warenbehälter nach einem der Ansprüche 1 bis 7, **dadurch gekennzeichnet, daß** die Schubschiene (14) der Schubvorrichtung (5) mit einem zentralen Führungsprofil (P) mit Aufnahmerinne (20) versehen ist, in dieser die Rückholfeder (7) verläuft und in parallelem Abstand zu dieser das Leitplastik-Potentiometer (19) in der Aufnahmerinne (20) gehalten ist.

9. Warenbehälter nach einem der Ansprüche 1 bis 4, **dadurch gekennzeichnet, daß** als Abstandssensor eine im Bereich der Rückwand (23) des Warenkanals (4) angeordnete Sender-Empfänger-Einheit (22) versehen ist, mittels der ein am Warenschieber (6) reflektierter Meßstrahl (F) aufnehmbar und der Signalverarbeitungseinheit (11) zuführbar ist.

10. Warenbehälter nach einem der Ansprüche 1 bis 4, **dadurch gekennzeichnet, daß** die jeweilige Position des Warenschiebers (6) über eine an der Rückholfeder (7), an der Schubschiene (14) und/oder an dem Bodenteil (14') befindliche Markierung einer opto-elektronischen Empfangseinheit (22'; 22") zugeführt und aus diesem Signal in der Signalverarbeitungseinheit (11) die Anzahl der Verpackungseinheiten (3) ableitbar ist.
